# EUROPEAN PATENT APPLICATION

(11) **EP 2 781 626 A1**
(43) Date of publication of application: **24.09.2014**
(21) Application number: 11875786.3
(22) Date of filing: 15.11.2011
(51) Int. Cl.: C25D 1/10, B29C 33/38

(54) **PRODUCTION METHOD FOR TRANSFER MOLD, TRANSFER MOLD PRODUCED USING SAME, AND COMPONENT PRODUCED USING SAID TRANSFER MOLD**

(71) Applicant: Leap Co. Ltd., Kanagawa 224-0032 (JP)
(72) Inventor: SANO, Takashi, Yokohama-shi Kanagawa 224-0032 (JP); TERADA, Tokinori, Yokohama-shi Kanagawa 224-0032 (JP)
(74) Representative: Becker Kurig Straus
(86) International application number: PCT/JP2011/006356
(87) International publication number: WO 2013/072954

(57) **Abstract**

A transfer mold that is used in production of a component by electroplating and has high workability and superior durability as well as a component produced thereby are provided. A method therefor includes the steps of: forming a pattern of a desired component by providing a reverse pattern of the pattern of the desired component on a metal substrate 10 and etching the metal substrate 10 using the reverse pattern as a mask; and treating the reverse pattern with heat or removing the reverse pattern and forming an insulation layer 30, 50 in a portion where the reverse pattern has been removed.

## Description

### Technical Field

The present invention relates to a transfer mold manufacturing method, a transfer mold manufactured thereby, and a component produced by the transfer mold. More specifically, the present invention relates to a method for manufacturing a transfer mold for production of a component by electroplating, a transfer mold manufactured thereby, and a component produced thereby, wherein the transfer mold has high workability and superior durability.

### Background Art

Electroplating allows formation of a thick film conductor with less restriction in terms of dimension. It is therefore widely used in production of display components such as a dial and hands of a watch, machine components such as a small gear, a spring, a pipe and a diaphragm (pressure sensor) and electronic components such as a wiring of a semiconductor device and a coil.

Patent Document 1 discloses manufacturing a cavity insert by: first creating a machined master mold on which a fine pattern has been formed in advance; subsequently creating a transfer master mold by hot press from the machined master mold; and then creating the cavity insert by electroplating from the transfer master mold.

Patent Document 2 discloses manufacturing a watch dial by the steps of: forming a mask pattern having openings on a surface of a silicon wafer; performing an anisotropic etching; forming a common electrode film; forming an electroplated film which grows on the common electrode film; etching the silicon wafer; and forming a resin watch dial having protruding portions by using the electroplated film as a transfer mask.

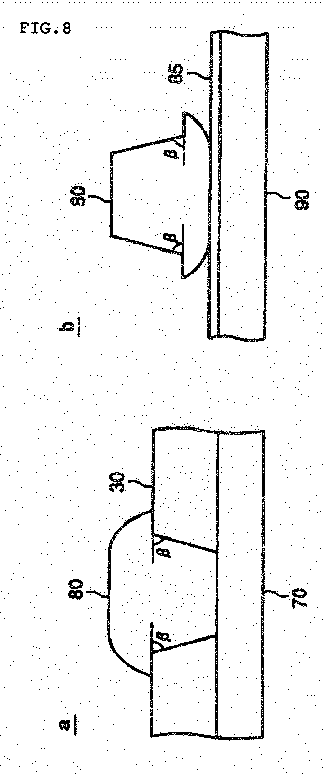

Fig. 8 shows structural drawings of a component formed by using a conventional transfer mold. In Fig. 8a, for the purpose of forming a component 80, a photoresist 30 is patterned on a metal substrate 70 to a shape of the component by partially removing the same. The metal substrate 70, on which the resist pattern has thus been formed, is used as a transfer mold for electroplating (hereinafter referred to as "EP") a predetermined metal (Ag, Cu, Ni, etc.) to form the component 80.

In Fig. 8b, the component 80 molded by EP is transferred onto an adhesive bond 85 and then adhered to a component substrate 90. In this manner, the component having a given shape depending on its intended use is produced by EP and transferred onto the component substrate 90 for use.

Here, for ease of release and transfer of the component 80, the angles β formed at sidewalls of the photoresist 30 are each set to be a blunt angle of less than 45°. In the meantime, when providing an electronic component such as a wiring, a coil, etc. on a semiconductor substrate, it is formed by EP in such a manner that it fills up along the sidewalls of the photoresist 30. As such, in a case where a wiring pattern, a conductive coil or the like is formed as a long component, it contacts the sidewalls in large area, resulting in increased release resistance in the release and transfer of the component. That is, when using a transfer mold made with patterned photoresist, the transfer of the component onto the component substrate 90 requires an application of a release force that is comparable to the increased release resistance. This causes the edge of the photoresist 30, which is appressed to the metal substrate 70, to be easily stripped. In fact, the resist is stripped after a few times of use, and as a result, a problem arises that the transfer mold can then no longer be in use.

Meanwhile, the conventional manufacture of the display components such as a dial and hands of a watch and machine components such as a small gear, a spring, a pipe and a diaphragm (pressure sensor) by EP is described. These conventional components are produced, in the same manner as the above, according to the steps depicted in Fig. 8. Here again, depending on the type of the component such as a gear, the metal substrate 70 and the component 80 contact with each other in large area, thereby increasing release resistance in the release and transfer of the component 80 and making the transfer operation difficult. In a case of producing a spring or the like, mutual sidewalls contact in a long area, which causes the release resistance in the release from the sidewalls of the photoresist 30 to increase. As a result, the edge of the pattern of the photoresist 30 can easily be stripped.

### Citation List

### Patent Documents

Patent Document 1: Japanese Patent Application Laid-Open No. 2004-1535
Patent Document 2: Japanese Patent Application Laid-Open No. 2004-257861

### Summary of the Invention

### Problems to be solved by the Invention

The present invention has been made in order to solve the above problem, and its purpose is to provide a method for manufacturing a transfer mold having high workability and superior durability for production of a component by EP, a transfer mold manufactured thereby, and a component produced thereby.

### Means for solving the Problems

A transfer mold manufacturing method of the present invention is a method for manufacturing a transfer mold for use in production of a component by electroplating, and it includes steps of: forming a pattern of a component having a desired angle at a sidewall thereof by providing a reverse pattern of the pattern of the desired component on a metal substrate and etching the metal substrate using the reverse pattern as a mask; and treating the reverse pattern with heat or removing the reverse pattern and forming an insulation layer in a portion where the reverse pattern has been removed.

The transfer mold manufacturing method of the present invention includes, in the above transfer mold manufacturing method, a step of removing the reverse pattern and forming an insulation layer in a portion where the reverse pattern has been removed and on the sidewall of the formed pattern of the component.

The transfer mold manufacturing method of the invention of the instant application includes, after the step of forming the insulation layer, a step of providing a releasing layer for ease of a release of the component produced by electroplating by depositing or treating with heat.

A transfer mold according to the present invention is manufactured by the above transfer mold manufacturing method.

A transfer mold manufacturing method of the present invention is a transfer mold manufacturing method in production of a component by electroplating, and it includes steps of: providing a pattern of the component having a desired angle at a sidewall thereof directly on a metal substrate by controlling cutting means; and covering a portion other than the formed pattern of the component or the portion other than the formed pattern of the component and the sidewall of the pattern of the component with an insulation layer.

The transfer mask manufacturing method of the present invention includes, in the above transfer mold manufacturing method, following the step of covering the insulation layer, a step of providing a releasing layer for ease of a release of the component produced by electroplating by depositing or treating with heat.

The transfer mold manufacturing method of the present invention includes, in the above transfer mold manufacturing method, following the step of providing the pattern of the component directly on the metal substrate, steps of: providing a releasing layer for ease of a release of the component produced by electroplating by treating with heat; and forming an insulation layer in the portion other than the formed pattern of the component.

A transfer mold according to the present invention is manufactured by the above transfer mold manufacturing method.

A component according to the present invention is produced by use of the above transfer mold.

### Advantageous Effect of the Invention

The present invention makes it possible to provide a transfer mold having high workability and superior durability for production of a component by EP and a component produced thereby.

### Brief Description of the Drawings

Fig. 1 is a process drawing showing the steps for manufacturing a transfer mold according to a first embodiment of the present invention.
Fig. 2 is a process drawing showing the steps for manufacturing a transfer mold according to a second embodiment of the present invention.
Fig. 3 is a process drawing showing the steps for manufacturing a transfer mold according to a third embodiment of the present invention.
Fig. 4 is a process drawing showing the steps for manufacturing a transfer mold according to a fourth embodiment of the present invention.
Fig. 5 is a process drawing showing the steps for manufacturing a transfer mold according to a fifth embodiment of the present invention.
Fig. 6 is a process drawing showing the steps for manufacturing a transfer mold according to a sixth embodiment of the present invention.
Fig. 7 is a drawing showing the steps for manufacturing a component according to the present invention.
Fig. 8 is a structural drawing showing a component formed by a conventional transfer mold.

### Mode for carrying out the Invention

### Embodiments

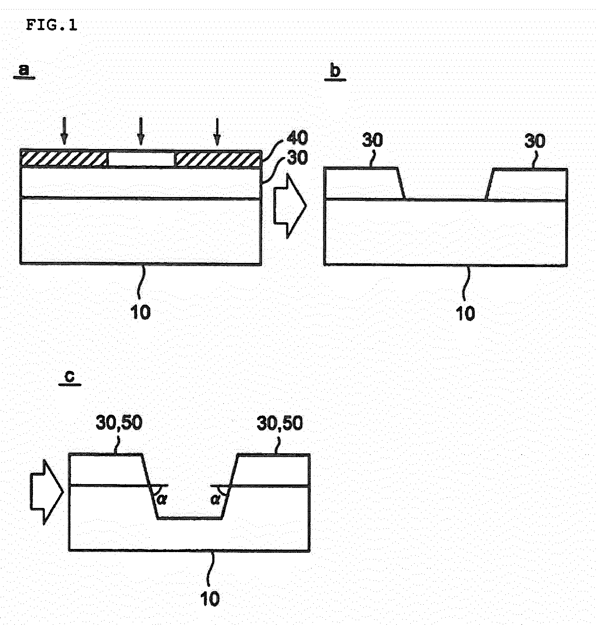

Steps for manufacturing a transfer mold according to the present invention are described with reference to the drawings. Fig. 1 depicts the steps for manufacturing a transfer mold in accordance with the first embodiment. In Fig. 1a, a photoresist 30 applied on a metal substrate 10 is subjected to an exposure effected from the direction of the arrows with an intervening photomask 40 having a reverse pattern of a desired component. Fig. 1b shows a resist pattern 30 formed by developing the exposed reverse pattern of the component. In Fig. 1c, with use of the resist pattern 30 as a mask, a pattern of the desired component is formed so as to have optional angles α at sidewalls thereof by controlling treatment conditions chemically by chemical etching, etc. or physically by beam etching, etc.

This is followed by an insulation layer formation process, namely, the resist pattern 30 is either treated with heat so that it is cured and serves as an insulation layer or, alternatively, removed so that an insulation layer 50 of SiO₂ or the like is formed in the portion where the resist pattern 30 has been removed. In this way, the portion other than the pattern is electrically insulated and the transfer mold is completed. Since this transfer mold has the pattern of the desired component engraved thereon and formed integrally with the metal substrate 10, there is no possibility of the pattern being stripped. As a result, the transfer mold has superior durability.

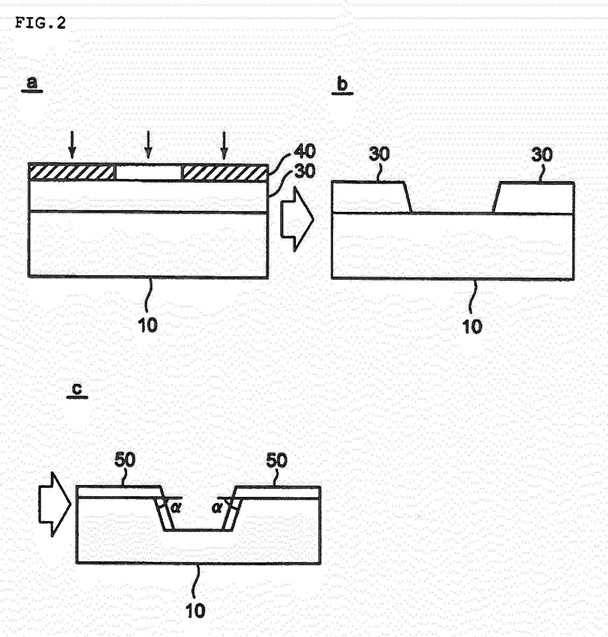

Fig. 2 is a process drawing showing the steps for manufacturing a transfer mold in accordance with the second embodiment of the present invention. Explanation of Figs. 2a and 2b is omitted as they are the same as Figs. 1a and 1b. In Fig. 2c, the resist pattern 30 has been removed after the treatment thereof. The transfer mold is completed by performing the insulation layer formation process for forming the insulation layer 50 of SiO₂ or the like in the portion where the resist pattern has been removed and on the sidewalls of the desired pattern that has been formed.

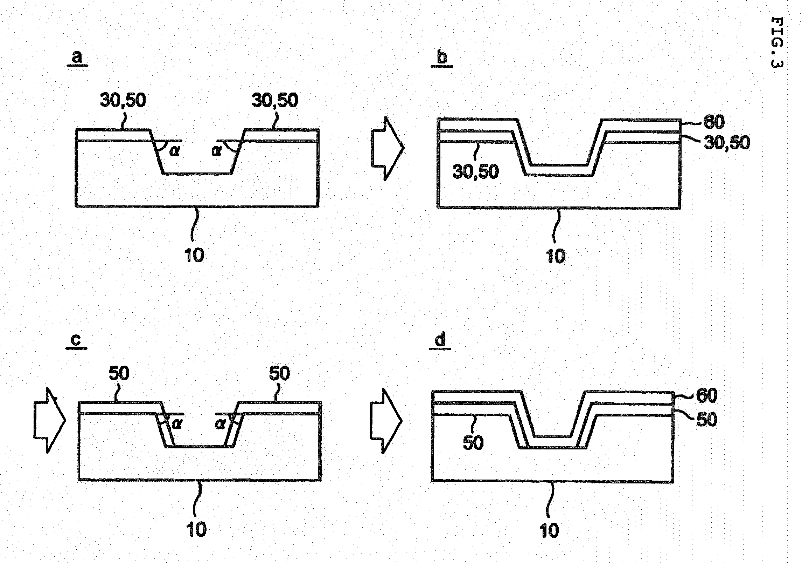

Fig. 3 is a process drawing showing the steps for manufacturing a transfer mold in accordance with the third embodiment of the present invention. Explanation of Fig. 3a is omitted as it is the same as Fig. 1c. In Fig. 3b, a releasing layer formation process is performed. That is, for ease of the release of the component to be electroplated, a releasing layer 60 of a metal oxide (AlOx, TiOx, etc.), a nitride or an organic substance (resist) is formed on the entire surface of the side treated in Fig. 3a to such a thickness of 1 to 1000 Å that allows the conductivity thereof to be maintained. The transfer mold is thus completed. The coverage of the entire contact surface between this transfer mold and the component to be produced with the releasing layer 60 makes it possible to further improve releasability.

Explanation of Fig. 3c is omitted as it is the same as Fig. 2c. In Fig. 3d, the releasing layer formation process is performed. That is, for ease of the release of the component to be electroplated, the releasing layer 60 of an optional metal oxide (AlOx, TiOx, etc.), a nitride or an organic substance (resist) is formed chemically by CVD (Chemical Vapor Deposition) or physically by sputtering on the entire surface of the side to be treated in Fig. 3c to such a thickness of 1 to 1000 Å that allows the conductivity thereof to be maintained. The transfer mold is thus completed. Similarly to Fig. 3b, the coverage of the entire contact surface between this transfer mold and the component to be produced with the releasing layer makes it possible to further improve releasability.

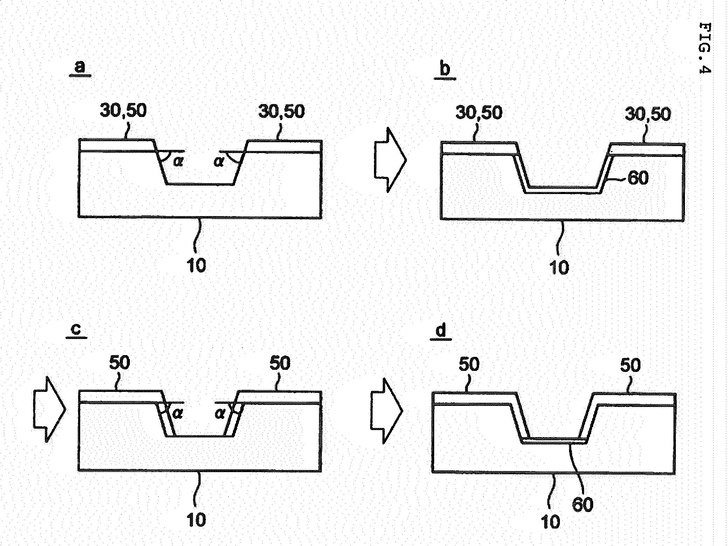

Fig. 4 is a process drawing showing the steps for manufacturing a transfer mold in accordance with the fourth embodiment of the present invention. Explanation of Fig. 4a is omitted as it is the same as Fig. 1c. Following the insulation layer formation process in Fig. 4a, the releasing layer formation process is performed in Fig. 4b. That is, the metal substrate 10 is subjected to heat treatment so as to form a metal oxide layer which serves as the releasing layer 60 on the surface thereof to be treated. The transfer mold is thus completed. The coverage of the entire contact surface between this transfer mold and the component to be produced with the releasing layer 60 makes it possible to improve workability.

Explanation of Fig. 4c is omitted as it is the same as Fig. 2c. In Fig. 4d, following the insulation layer formation process in Fig. 4c, the releasing layer formation process is performed. That is, the metal substrate 10 is subjected to heat treatment so as to form a metal dioxide layer which serves as the releasing layer 60 on the surface thereof to be treated. The transfer mold is thus completed. As the metal surface of this transfer mold is covered by the releasing layer 60, it is possible to improve workability.

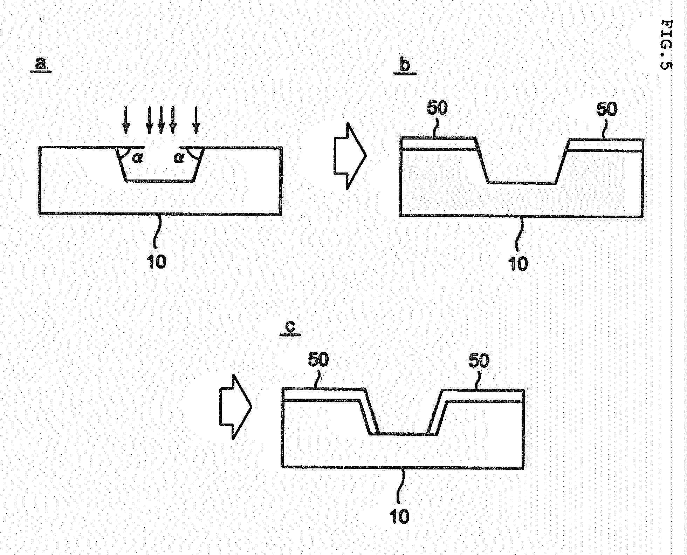

Fig. 5 is a process drawing showing the steps for manufacturing a transfer mold in accordance with the fifth embodiment of the present invention. In Fig. 5a, conditions for treatment by an electrical beam or cutting means by way of a mechanical cutting tool are controlled in such a manner that a desired pattern of the component having optional angles α at the sidewalls is directly provided on the metal substrate 10 from the direction of the arrows. Then, in Fig. 5b, the insulation layer formation process as in Fig. 1c is performed in order to form the insulation layer 50 of SiO₂ or the like in the portion other than the formed pattern. The transfer mold is thus completed. The transfer mold may also be completed by subsequently performing the releasing layer formation process as in Fig. 3b.

Further, in Fig. 5c, an insulation layer formation process is performed as in Fig. 2c. That is, the resist pattern is removed after the treatment thereof, and the insulation layer 50 of SiO₂ or the like is formed in the portion where the resist pattern has been removed and on the sidewalls of the desired pattern that has been formed. The transfer mold is thus completed. The transfer mold may also be completed by subsequently performing the releasing layer formation process as in Fig. 3d.

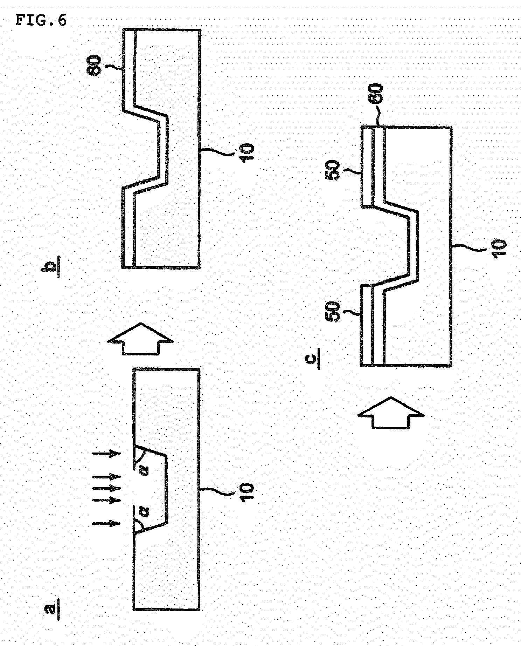

Fig. 6 is a process drawing showing the steps for manufacturing a transfer mold in accordance with the sixth embodiment of the present invention. In Fig. 6a, conditions for treatment by an electrical beam or cutting means by way of a mechanical cutting tool are controlled in such a manner that a desired pattern of the component having optional angles α at the sidewalls is directly provided by engraving on the metal substrate 10 from the direction of the arrows. Then, in Fig. 6b, the releasing layer formation process is performed. That is, the metal substrate 10 is subjected to heat treatment as in Figs. 4b and 4d so that a metal oxide film which serves as the releasing layer 60 is formed thereon. In Fig. 6c, the insulation layer formation process is performed in order to form the insulation layer 50 of SiO₂ or the like as in Fig. 5b. The transfer mold is thus completed.

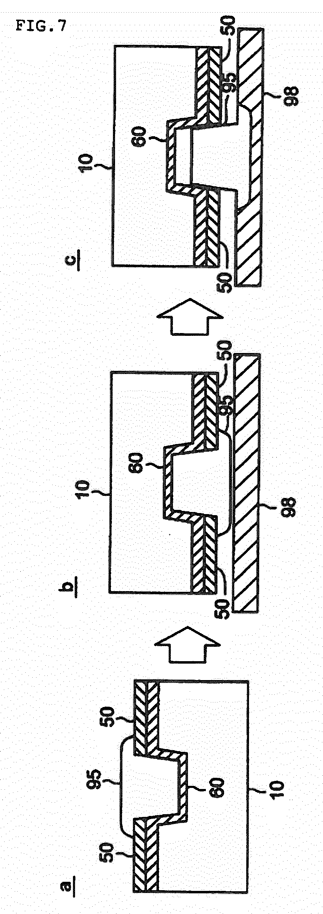

Now, description is made for the manufacturing method of the component using the transfer mold according to the present invention. Fig. 7 is a drawing showing the steps for manufacturing a component according to the present invention. In Fig. 7a, a desired metal (Ag, Cu, Ni, etc.) is electroplated on, for example, the transfer mold as shown in Fig. 6c to form the component 95. In Fig. 7b, the component 95 molded by EP is, as in Fig. 8b, transferred onto the adhesive bond 85 and then adhered to the component substrate 90. Alternatively, the component 95 is adhered to a green sheet 98 which is then treated with heat for curing. Where the component 95 is adhered to the green sheet 98, the use of the adhesive bond 85 is eliminated by such softness of the green sheet 98 before curing that the component 95 is buried therein. In this way, the component 95 having a shape with optional angles α at the sidewalls is provided by EP. It can be repetitively molded and transferred onto the substrate 97 or green sheet 98 for diverse intended use.

The metal substrate 10 may be a plate of a metal such as SUS (Steel Use Stainless), Ni or Cu. A material for electroplating the component 95 may be Ag, Cu, Ni, Au, Sn, Pb, Fe, Cr, Pt, Pd or an alloy of these metals. The releasing layer 60 may be any of a metal oxide (FeOx, NiOx, AlOx, TiOx, CrOx, CuOx, NbOx, VOx, WO), a nitride or an organic resist, and it may have such a thickness (of 1 to 1000 A, for example) that allows a tunnel current to flow therein.

As described above, the present invention is able to provide a transfer having high workability and superior durability and a component produced thereby.

### Description of Reference Numerals

- 10: metal substrate
- 30: photoresist
- 40: photomask
- 50: insulation layer
- 60: releasing layer
- 80: component
- 85: adhesive bond
- 90: component substrate
- 95: component
- 98: green sheet
- α: inclination angle formed at sidewall
- β: inclination angle formed at sidewall

## Claims

1. A transfer mold manufacturing method for manufacturing a transfer mold for use in production of a component by electroplating, the method comprising steps of:
forming a pattern of a component having a desired angle at a sidewall thereof by providing a reverse pattern of the pattern of the desired component on a metal substrate and etching the metal substrate using the reverse pattern as a mask; and
treating the reverse pattern with heat or removing the reverse pattern and forming an insulation layer in a portion where the reverse pattern has been removed.

2. The method according to claim 1, comprising a step of removing the reverse pattern and forming an insulation layer in a portion where the reverse pattern has been removed and on the sidewall of the formed pattern of the component.

3. The method according to claim 1 or 2, comprising, after the step of forming the insulation layer, a step of providing a releasing layer for ease of a release of the component produced by electroplating by depositing or treating with heat.

4. A transfer mold manufactured by the method according to any one of claims 1 to 3.

5. A transfer mold manufacturing method in production of a component by electroplating comprising steps of:
providing a pattern of the component having a desired angle at a sidewall thereof directly on a metal substrate by controlling cutting means; and
covering a portion other than the formed pattern of the component or the portion other than the formed pattern of the component and the sidewall of the pattern of the component with an insulation layer.

6. The method according to claim 5 comprising, following the step of covering the insulation layer, a step of providing a releasing layer for ease of a release of the component produced by electroplating by depositing or treating with heat.

7. The method according to claim 5, comprising, following the step of providing the pattern of the component directly on the metal substrate, steps of:
providing a releasing layer for ease of a release of the component produced by electroplating by treating with heat; and
forming an insulation layer in the portion other than the formed pattern of the component.

8. A transfer mold manufactured by the method according to any one of claims 5 to 7.

9. A component produced by use of the transfer mold according to claim 4 or 8.

## Amended claims

### Amended claims under Art. 19.1 PCT

**1.** A transfer mold manufacturing method for manufacturing a transfer mold for use in production of a component by electroplating, the method comprising steps of:
forming a pattern of a component having a desired angle at a sidewall thereof by providing a reverse pattern of the pattern of the desired component on a metal substrate and etching the metal substrate using the reverse pattern as a mask; and
removing the reverse pattern and forming an insulation layer only in a portion where the reverse pattern has been removed.

**2.** The method according to claim 1, comprising a step of removing the reverse pattern and forming an insulation layer only in a portion where the reverse pattern has been removed and on the sidewall of the formed pattern of the component.

**3.** The method according to claim 1 or 2, comprising, after the step of forming the insulation layer, a step of providing a releasing layer for ease of a release of the component produced by electroplating by depositing or treating with heat.

**4.** A transfer mold manufactured by the method according to any one of claims 1 to 3.

**5.** A transfer mold manufacturing method in production of a component by electroplating comprising steps of:
providing a pattern of the component having a desired angle at a sidewall thereof directly on a metal substrate by controlling cutting means; and
covering a portion other than the formed pattern of the component or the portion other than the formed pattern of the component and the sidewall of the pattern of the component with an insulation layer.

**6.** The method according to claim 5 comprising, following the step of covering the insulation layer, a step of providing a releasing layer for ease of a release of the component produced by electroplating by depositing or treating with heat.

**7.** The method according to claim 5, comprising, following the step of providing the pattern of the component directly on the metal substrate, steps of:
providing a releasing layer for ease of a release of the component produced by electroplating by treating with heat; and
forming an insulation layer in the portion other than the formed pattern of the component.

**8.** A transfer mold manufactured by the method according to any one of claims 5 to 7.

**9.** A component produced by use of the transfer mold according to claim 4 or 8.
